# EUROPÄISCHE PATENTSCHRIFT

(11) **EP 1 889 709 B1**
(45) Veröffentlichungstag und Bekanntmachung des Hinweises auf die Patenterteilung: **05.11.2008**
(21) Anmeldenummer: 07015919.9
(22) Anmeldetag: 13.08.2007
(51) Int. Cl.: B29D 22/00, F16F 9/04

(54) **Federelement**
Spring element
Elément de ressort

(30) Priorität: 15.08.2006 DE 202006012598 U
(43) Veröffentlichungstag der Anmeldung: 20.02.2008
(73) Patentinhaber: Hartmann, Siegbert, 32584 Löhne (DE)
(72) Erfinder: Hartmann, Siegbert, 32584 Löhne (DE)
(74) Vertreter: Rolf, Gudrun

(56) Entgegenhaltungen:
- EP-A- 1 273 834
- DE-U1- 29 920 182
- GB-A- 890 876
- US-A- 2 581 416

## Beschreibung

Die Erfindung betrifft ein Federelement, insbesondere zum Einbau in Matratzen, aus einem gummielastischen kreis- oder spiegelsymmetrischen Faltenbalg mit ebenen oberen und unteren Auflagerflächen und parallel dazwischen angeordneten Balgenfalten mit nach oben abnehmenden Außendurchmessern der Außen- und Innenspitzen der einzelnen Balgenfalten.

Es ist ein Federelement bekannt, DE 299 20 182 U1, welches als Federelement einen Faltenbalg in pyramidenstumpf- oder kegelstumpfförmiger Gestalt aufweist, dessen Federfalten in zu Grund- und Deckenebenen parallelen Ebenen angeordnet sind, was jedoch den Nachteil aufweist, dass sich die Flanken der Federfalten bei einer sehr starken Kompression des Faltenbalges aufeinander legen, so dass sich zum einen der mögliche Federweg des Federelementes sehr stark reduziert und zum anderen, dass sich ein mechanischer Verschleiß mit beschleunigter Alterung und Zerstörung des Federelementes einstellen kann.

Aufgabe der Erfindung ist es, ein Federelement aus einem Faltenbalg zur Verfügung zu stellen, welches bei geringem Gewicht und guten Federeigenschaften einen deutlich vergrößerten Federweg aufweist und dessen Lebensdauer optimiert ist.

Die Lösung dieser Aufgabe ergibt sich in Verbindung mit den Oberbegriffsmerkmalen insbesondere dadurch, dass die Innenspitzen der Balgenfalten sich in einem maximal zusammengedrückten Zustand des Federelements in den Bereich der unteren Auflagerfläche erstrecken oder sich sogar dort abstützen und dass dabei die Außenspitzen der Balgenfalten in einer dazu parallelen, darüber liegenden Ebene angeordnet sind, die maximal so weit von der unteren Auflagerfläche entfernt ist, wie es dem Breitenmaß einer vollständig zusammen gedrückten Balgenfalte entspricht.

Diese Ausgestaltung des Faltenbalges des erfinderischen Federelements ermöglicht damit einen größtmöglichen Federweg ΔH und hat des Weiteren zum Vorteil, dass die quasi frei aneinander liegenden Balgenfalten nicht gegenseitig von einer Verformungskraft des Federelementes belastet werden und deswegen auch nicht mechanisch verschleißen können. Das neuerungsgemäße Federelement eignet sich bevorzugt zum Einbau in Matratzen, kann aber auch als Federkörper einer aufgelösten Oberfläche einer Untermatratze oder für Bettroste, Polstermöbel oder Autositze verwandt werden. Des Weiteren zeichnet sich das erfinderische Federelement durch ein sehr geringes spezifisches Gewicht bei sehr guten Federeigenschaften aus.

Weitere vorteilhafte Ausgestaltungen des Gegenstandes der Erfindung ergeben sich mit und in Kombination aus den nachfolgenden Unteransprüchen.

Besonders bevorzugt sind Ausführungsformen des Federelementes mit regelmäßigen geometrischen Formen, beispielsweise als kegelstumpf- oder mehreckige pyramidenstumpfförmige Ausgestaltungen, um in allen Belastungsrichtungen möglichst identische Federraten verwirklichen zu können. Die Balgenfalten liegen vorteilhafterweise in maximal zusammengedrücktem Zustand von außen nach innen etwa vertikal nebeneinander und nahezu kräftefrei aneinander an, und nicht, wie beim Stand der Technik erläutert, aufeinander, so dass ein größtmögliches ΔH als Federweg erzielt werden kann. Die aneinander liegenden Balgenfalten sind hierbei vorteilhafterweise mit ihren Außenspitzen leicht nach außen und den Innenspitzen leicht nach innen gelegt ausgerichtet, so dass die maximal erreichbare Kompression des Faltenbalges noch größer ist, als wenn die aneinander liegenden Balgenfalten exakt in Richtung der Krafteinwirkungsrichtung stehen würden.

Denkbar sind vorteilhafte Ausgestaltungen des Gegenstandes der Erfindung, die aus zwei oder mehr zusammen gesetzten Federelementen aufgebaut sind, wobei die oberen oder die unteren Auflagerflächen die gegenseitigen Kontaktflächen bilden können, so dass im groben Querschnitt X-förmige oder rautenförmige Federelemente erzeugbar sind. Hierdurch wird ein hohes Maß an Variabilität des erfindungsgemäßen Federelementes erzielt.

Bei einer weiteren vorteilhaften Ausgestaltung des Gegenstandes der Erfindung sind die oberen und/ oder die unteren Auflagerflächen mit Auflagertellern ausgestattet, um die Federelemente noch besser den jeweiligen Verwendungszwecken anpassen zu können. Die Auflagerteller können insbesondere aus einem kostengünstigen harten Kunststoff bestehen, so dass hierdurch eine wirtschaftlichere Variante anderer, vollständig aus gummielastischen Elastomeren bestehender Federelemente verwirklicht werden kann.

Bei einer solchen Variante, die mit einer oberen Auflagerfläche versehen ist, stützen sich die Außenspitzen der Balgenfalten im maximal zusammengedrückten Zustand auf der Unterseite des oberen Auflagertellers ab und sorgen auch hier, genauso wie die Innenspitzen der Balgenfalten es im Bereich der unteren Auflagerfläche tun, für eine optimale, großflächige Unterstützung einer aufzunehmenden Betriebskraft.

Entsprechend einer weiteren erfinderischen Ausgestaltung des Federelementes weist dieses Bereiche mit unterschiedlich steifen Elastomeren auf, wobei etwa einzelne Balgenfalten aus unterschiedlichen Elastomeren bestehen können oder aber einzelne vertikale Streifen des Faltenbalges, wodurch sich zum einen die Federrate von degressiv über linear bis hin zu progressiv einstellen lässt oder aber sich zum anderen die Federrate in verschiedenen Belastungsrichtungen des Federelementes gezielt variieren lässt.

Nachfolgend ist ein Ausführungsbeispiel der Erfindung anhand von Zeichnungen näher beschrieben. Es zeigen:
- Fig. 1: eine geschnittene Seitenansicht eines Federelementes,
- Fig. 2: das Federelement gem. Fig. 1 in maximal komprimierter Position,
- Fig. 3: das Federelement gem. Fig. 1 mit zusätzlichen Auflagertellern oben und unten und
- Fig. 4: das Federelement gem. Fig. 3 in einer maximal komprimierten Position.

Das Federelement 1 besteht aus einem kegelstumpf- oder mehreckig pyramidenstumpfförmigen gummielastischen Faltenbalg 2, dessen Balgenfalten 7 sich von unten nach oben derart in ihren Radien verjüngen, dass sich bei einer Kraftbelastung von oben die Balgenfalten 7 so zusammenlegen können, dass sich die Innenspitzen 5 der Balgenfalten 7 bis in den Bereich der unteren Auflagerfläche 4 des Federelementes 1 verformen lassen, wobei die Außenspitzen 6 der Balgenfalten 7 auch nach oben in einer zur unteren Auflagerfläche 4 parallelen oberen Ebene 8 nebeneinander angeordnet sind und diese obere Ebene 8 näher an die untere Auflagerfläche 4 des Faltenbalges 2 angenähert ist, als das Maß, das der Breite einer vollkommen zusammengedrückten Balgenfalte entspricht, da diese im maximal zusammengedrückten Zustand schräg nach außen hin zusammengefaltet ausgerichtet sind.

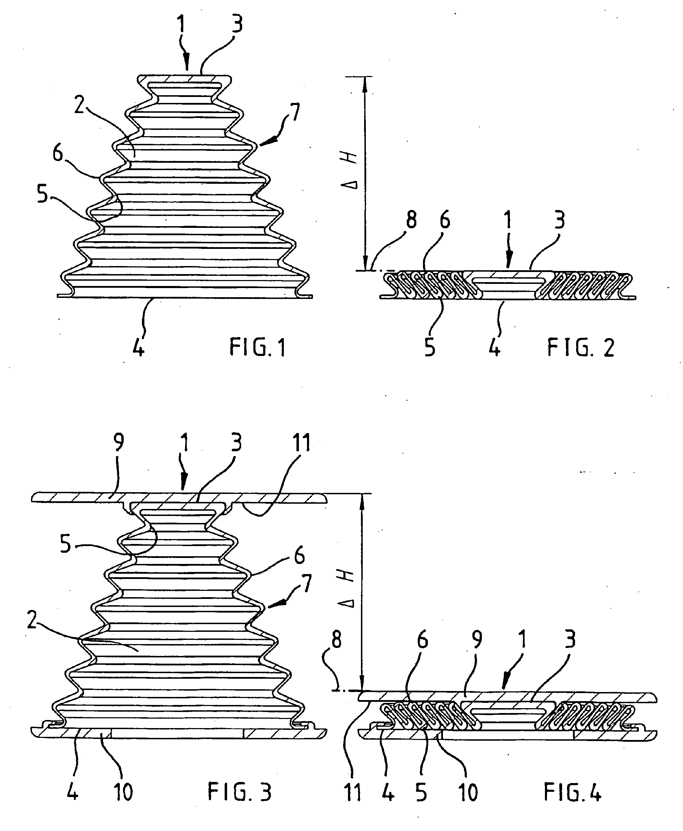

Wie in den Fig. 3 und 4 dargestellt, kann das Federelement 1 mit oberen und unteren Auflagertellern 9;10 versehen sein, so dass sich die Federelemente 1 wahlfrei für Matratzen, Lattenroste, Polstermöbel oder auch Autositze nutzen lassen.

Die einzelnen Balgenfalten 7 können aus unterschiedlich steifen Elastomeren ausgebildet sein, so dass sich das Federelement 1 mit einer beliebigen Federrate herstellen lässt. Der größtmögliche Federweg ist in den Figuren mit der Bezeichnung ΔH angegeben.

## Patentansprüche

1. Federelement, insbesondere zum Einbau in Matratzen, aus einem gummielastischen kreis- oder spiegelsymmetrischem Faltenbalg (2) mit ebenen oberen und unteren Auflagerflächen (3;4) und parallel dazwischen angeordneten Balgenfalten (7) mit nach oben abnehmenden Außendurchmessern der Außen- und Innenspitzen (6;5) der einzelnen Balgenfalten (7), **dadurch gekennzeichnet, dass** die Innenspitzen (5) der Balgenfalten (7) sich in einem maximal zusammengedrückten Zustand des Federelementes (1) bis in den Bereich der unteren Auflagerfläche (4) erstrecken oder dort abstützen und dass **dadurch** die Außenspitzen (6) der Balgenfalten (7) in einer dazu parallelen, darüber liegenden Ebene (8) angeordnet sind, die maximal so weit von der unteren Auflagerfläche (7) entfernt ist, wie es dem Breitenmaß einer vollständig zusammengedrückten Balgenfalte (7) entspricht.

2. Federelement nach Anspruch 1, **dadurch gekennzeichnet, dass** es eine kegelstumpf- oder mehreckige pyramidenstumpfförmige Grundform aufweist.

3. Federelement nach einem der vorgenannten Ansprüche, **dadurch gekennzeichnet, dass** die Balgenfalten (7) des Faltenbalges (2) im maximal zusammengedrückten Zustand von außen nach innen nebeneinander und nahezu kräftefrei aneinander liegen.

4. Federelement nach Anspruch 3, **dadurch gekennzeichnet, dass** die aneinander liegenden Balgenfalten (7) mit ihren Außenspitzen (6) leicht nach außen und den Innenspitzen (5) leicht nach innen gelegt ausgerichtet sind.

5. Federelement nach einem der vorgenannten Ansprüche, **dadurch gekennzeichnet, dass** es aus zwei oder mehreren Federelementen (1) zusammengesetzt ist und die oberen und die unteren Auflagerflächen (3;4) hierzu gegenseitige Kontaktflächen bilden.

6. Federelement nach einem der vorgenannten Ansprüche, **dadurch gekennzeichnet, dass** die oberen und/ oder unteren Auflagerflächen (3;4) mit Auflagertellern (9;10) ausgestattet sind.

7. Federelement nach Anspruch 6, **dadurch gekennzeichnet, dass** die Außenspitzen (6) der Balgenfalten (7) im maximal zusammengedrückten Zustand die Unterseite (11) des oberen Auflagertellers (9) unterstützen.

8. Federelement nach einem der vorgenannten Ansprüche, **dadurch gekennzeichnet, dass** es Bereiche unterschiedlich steifer Elastomere aufweist.

9. Federelement nach Anspruch 8, **dadurch gekennzeichnet, dass** einzelne Balgenfalten (7) aus unterschiedlich steifen Elastomeren gefertigt sind.

10. Federelement nach Anspruch 8, **dadurch gekennzeichnet, dass** einzelne vertikal quer zur Umfangsrichtung verlaufende Streifen des Faltenbalges (2) aus unterschiedlich steifen Elastomeren bestehen.

## Claims

1. Spring element, in particular for installing in mattresses, made of an elastomeric circular-symmetrical or mirror-symmetrical folding bellows (2) with planar top and bottom bearing surfaces (3; 4) and bellows folds (7) arranged in parallel fashion therebetween, the external and internal points (6; 5) of the individual bellows folds (7) having external diameters which decrease in the upward direction, **characterized in that,** when the spring element (1) is in a state in which it is compressed to the maximum extent, the internal points (5) of the bellows folds (7) extend into the region of the bottom bearing surface (4), or are supported there, and **in that** the external points (6) of the bellows folds (7) are thus arranged in a parallel plane (8) which is located above and is spaced apart from the bottom bearing surface (4), at most, to an extent which corresponds to the width of a fully compressed bellows fold (7).

2. Spring element according to Claim 1, **characterized in that** it has a basic shape in the form of a truncated cone or a polygonal truncated pyramid.

3. Spring element according to one of the preceding claims, **characterized in that,** in the state in which they are compressed to the maximum extent, the folds (7) of the folding bellows (2) abut one beside the other, and virtually in a force-free manner, from the outside to the inside.

4. Spring element according to Claim 3, **characterized in that** the abutting bellows folds (7) have their external points (6) oriented slightly in the outward direction and the internal points (5) oriented slightly in the inward direction.

5. Spring element according to one of the preceding claims, **characterized in that** it is made up of two or more spring elements (1) and the top and the bottom bearing surfaces (3; 4), for this purpose, form mutual contact surfaces.

6. Spring element according to one of the preceding claims, **characterized in that** the top and/or bottom bearing surfaces (3; 4) are/is provided with bearing plates (9; 10).

7. Spring element according to Claim 6, **characterized in that,** in the state in which they are compressed to the maximum extent, the external points (6) of the bellows folds (7) support the underside (11) of the top bearing plate (9).

8. Spring element according to one of the preceding claims, **characterized in that** it has regions comprising elastomers of different degrees of stiffness.

9. Spring element according to Claim 8, **characterized in that** individual bellows folds (7) are produced from elastomers of different degrees of stiffness.

10. Spring element according to Claim 8, **characterized in that** individual strips of the folding bellows (2) which run vertically in a direction transverse to the circumferential direction consist of elastomers of different degrees of stiffness.

## Revendications

1. Elément de ressort, en particulier devant être incorporé dans des matelas, constitué d'un soufflet (2) en plastique élastomère à symétrie de révolution ou spéculaire, ayant des surfaces d'appui planes supérieure et inférieure (3 ; 4) et des plis de soufflet (7) disposés entre elles, avec des diamètres extérieurs diminuant vers le haut des pointes extérieures et intérieures (6 ; 5) des plis de soufflet individuels (7), **caractérisé en ce que** les pointes intérieures (5) des plis de soufflet (7) s'étendent, dans un état comprimé au maximum de l'élément de ressort (1), jusque dans la région de la surface d'appui inférieure (4), ou s'y appuient, et **en ce que** de ce fait les pointes extérieures (6) des plis de soufflet (7) sont disposées dans un plan (8) parallèle et disposé au-dessus de ceux-ci, qui est éloigné de la surface d'appui inférieure (7) au maximum de la dimensions en largeur d'un pli de soufflet (7) complètement comprimé.

2. Elément de ressort selon la revendication 1, **caractérisé en ce qu'**il présente une forme de base en forme de tronc de cône ou de tronc de pyramide polygonale.

3. Elément de ressort selon l'une quelconque des revendications précédentes, **caractérisé en ce que** les plis de soufflet (7) du soufflet (2), dans l'état comprimé au maximum s'appliquent depuis l'extérieur vers l'intérieur les uns à côté des autres et pratiquement sans force les uns contre les autres.

4. Elément de ressort selon la revendication 3, **caractérisé en ce que** les plis de soufflet (7) s'appliquant les uns contre les autres sont orientés avec leurs pointes extérieures (6) légèrement vers l'extérieur et avec les pointes intérieures (5) légèrement vers l'intérieur.

5. Elément de ressort selon l'une quelconque des revendications précédentes, **caractérisé en ce qu'**il est constitué de deux ou plusieurs éléments de ressort (1) et les surfaces d'appui supérieure et inférieure (3 ; 4) forment à cet effet des surfaces de contact opposées.

6. Elément de ressort selon l'une quelconque des revendications précédentes, **caractérisé en ce que** les surfaces d'appui supérieure et/ou inférieure (3 ; 4) sont munies de plateaux d'appui (9 ; 10).

7. Elément de ressort selon la revendication 6, **caractérisé en ce que** les pointes extérieures (6) des plis de soufflet (7), dans l'état comprimé au maximum, supportent le côté inférieur (11) du plateau d'appui supérieur (9).

8. Elément de ressort selon l'une quelconque des revendications précédentes, **caractérisé en ce qu'**il présente des régions en élastomères de rigidités différentes.

9. Elément de ressort selon la revendication 8, **caractérisé en ce que** des plis de soufflet (7) individuels sont fabriqués à partir d'élastomères de rigidités différentes.

10. Elément de ressort selon la revendication 8, **caractérisé en ce que** des bandes individuelles du soufflet (2), s'étendant verticalement transversalement à la direction circonférentielle se composent d'élastomères de rigidités différentes.
